(19) Europäisches Patentamt
European Patent Office
Office européen des brevets

(11) **EP 1 151 035 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(21) Anmeldenummer: **99972234.1**

(22) Anmeldetag: **04.11.1999**

(51) Int Cl.$^7$: **C08K 5/523**, C08L 69/00

(86) Internationale Anmeldenummer:
**PCT/EP1999/008412**

(87) Internationale Veröffentlichungsnummer:
**WO 2000/029476 (25.05.2000 Gazette 2000/21)**

(54) **FLAMMWIDRIGE WÄRMEFORMBESTÄNDIGE POLYCARBONAT-ABS-FORMMASSEN**

FLAME RESISTANT THERMOSTABLE POLYCARBONATE ABS MOULDING COMPOUNDS

MATIERES MOULABLES POLYCARBONATE-ABS RESISTANTES A LA FLAMME ET DE STABILITE DIMENSIONNELLE A CHAUD

(84) Benannte Vertragsstaaten:
**AT BE CH CY DE DK ES FI FR GB GR IE IT LI LU MC NL PT SE**

(30) Priorität: **18.11.1998 DE 19853108**

(43) Veröffentlichungstag der Anmeldung:
**07.11.2001 Patentblatt 2001/45**

(73) Patentinhaber: **Bayer MaterialScience AG
51368 Leverkusen (DE)**

(72) Erfinder:
- **ECKEL, Thomas
D-41540 Dormagen (DE)**
- **WITTMANN, Dieter
D-51375 Leverkusen (DE)**
- **STÖLTING, Jörn
D-51061 Köln (DE)**
- **ZOBEL, Michael
D-40547 Düsseldorf (DE)**

(56) Entgegenhaltungen:
**EP-A- 0 697 441**
**EP-A- 0 829 517**
**EP-A- 0 869 150**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 151 035 B1

## Beschreibung

Die vorliegende Erfindung betrifft mit Phosphorverbindungen flammwidrig ausgerüstete Polycarbonat-ABS-Formmassen, die ein ausgezeichnetes mechanisches Eigenschaftsniveau, eine hohe Wärmeformbeständigkeit und ein gutes Verarbeitungsverhalten aufweisen.

US-A 5 061 745 beschreibt Formmassen aus aromatischem Polycarbonat, Pfropfpolymerisat und Monophosphat. Diese Mischungen zeigen zwar ein gutes Fließverhalten, wegen der stark weichmachenden Wirkung der Monophosphate ist die Wärmeformbeständigkeit oft nicht ausreichend.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können. Durch die Anwesenheit der monomeren Phosphate kann häufig nicht das geforderte Niveau der Wärmeformbeständigkeit erreicht werden.

EP-A 747 424 beschreibt die Verwendung einer Kombination von Phosphat mit einem Molekulargewicht von ungefähr 500 bis 2 000 und von Phosphat mit einem Molekulargewicht von ungefähr 2 300 bis 11 000 als Flammschutzmittel in thermoplastischen Harzen, wobei eine Vielzahl von thermoplastischen Harzen aufgezählt werden.

In EP-A-0363608 werden flammwidrige Polymermischungen aus aromatischem Polycarbonat, styrolhaltigem Copolymer oder Pfropfcopolymer sowie oligomeren Phosphaten als Flammschutzadditive beschrieben. Für manche Anwendungen, wie beispielsweise Formteile im Inneren von Gehäuseteilen, ist die Wärmeformbeständigkeit dieser Mischungen oft nicht ausreichend.

Aufgabe der vorliegenden Erfindung ist daher, flammwidrige Polycarbonat-ABS-Formmassen herzustellen, die eine ausgezeichnete Wärmeformbeständigkeit neben gutem Verarbeitungsverhalten aufweisen. Mit dieser Eigenschaftskombination eignen sich die Materialien besonders für Gehäuse im Bereich stromführender Teile, da dann mit einer hohen thermischen Belastung zu rechnen ist.

Es wurde nun überraschenderweise gefunden, daß durch den Einsatz der erfindungsgemäßen Phosphorverbindungen, die sich im Aufbau durch verschiedene Struktureinheiten auszeichnen, flammwidrige Formmassen erhalten werden, die Formkörpern mit einem sehr guten mechanischen Eigenschaftsniveau und einer herausragenden Wärmeformbeständigkeit bei gutem Verarbeitungsverhalten, ergeben.

Gegenstand der vorliegenden Erfindung sind thermoplastische Formmassen enthaltend mindestens 2 Komponenten ausgewählt aus der Gruppe der aromatischen Poly(ester)carbonate, Pfropfpolymerisate von einem oder mehreren Vinylmonomeren auf eine oder mehrere Pfropfgrundlage mit einer Glasübergangstemperatur <10°C, thermoplastischem Vinyl(co)polymerisat und Polyalkylenterephthalat sowie 0,5 bis 20 Gew.-Teile Phosphorverbindung der allgemeinen Formel (I)

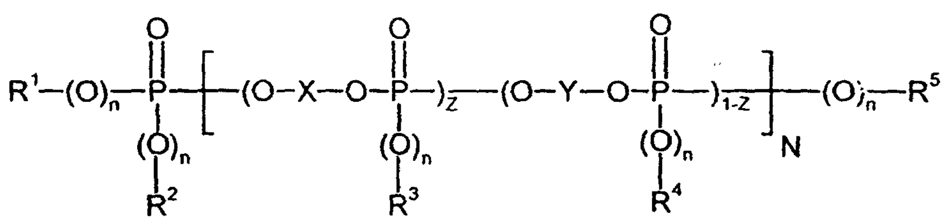

worin

| | |
|---|---|
| X und Y | für einen ein- oder mehrkernigen aromatischen Rest mit 6 bis 30 C-Atomen stehen und X und Y verschieden voneinander sind, |
| $R^1$, $R^2$, $R^3$, $R^4$ und $R^5$ | unabhängig voneinander, gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| z | 0,05 bis 0,95, vorzugsweise 0,15 bis 0,85, |
| n | unabhängig voneinander 0 oder 1, vorzugsweise 1, |
| N | 0,5 bis 30 bedeuten. |

Gegenstand der vorliegenden Erfindung sind vorzugsweise flammwidrige thermoplastische Formmassen enthaltend

A) 5 bis 95, vorzugsweise 10 bis 90 Gew.-Teile, besonders bevorzugt 20 bis 80 Gew.-Teile aromatisches Polycarbonat und/oder Polyestercarbonat

B) 1 bis 60, vorzugsweise 1 bis 40 Gew.-Teile, besonders bevorzugt 2 bis 30 Gew.-Teile, wenigstens eines Pfropfpolymerisats von

B.1 5 bis 95, vorzugsweise 20 bis 60 Gew.-% einem oder mehreren Vinylmonomeren auf

B.2 5 bis 95, vorzugsweise 40 bis 80 Gew.-% einem oder mehreren Pfropfgrundlagen mit einer Glasumwandlungstemperatur < 10°C, vorzugsweise 0°C, besonders bevorzugt < -20°C,

C) 0 bis 50, vorzugsweise 1 bis 30, besonders bevorzugt 2 bis 25, Gew.-Teile thermoplastisches Vinyl(co)polymerisat und/oder thermoplastisches Polyalkylenterephthalat

D) 0,5 bis 20 Gew.-Teile, vorzugsweise 1 bis 18 Gew.-Teile, besonders bevorzugt 2 bis 15 Gew.-Teile, wenigstens einer Phosphorverbindung der allgemeinen Formel (I)

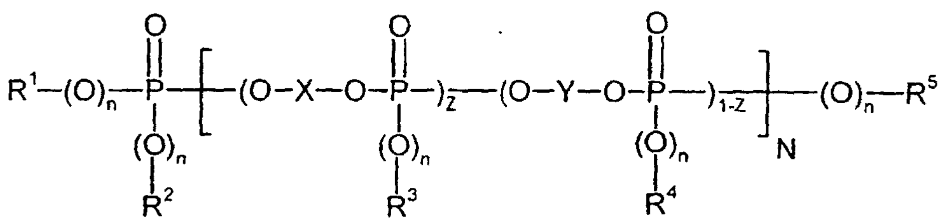

(I),

worin

| | |
|---|---|
| X und Y | für einen ein- oder mehrkernigen aromatischen Rest mit 6 bis 30 C-Atomen stehen und X und Y verschieden voneinander sind, |
| $R^1$, $R^2$, $R^3$, $R^4$ und $R^5$ | unabhängig voneinander, gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| z | 0,05 bis 0,95, vorzugsweise 0,15 bis 0,85, |
| n | unabhängig voneinander 0 oder 1, vorzugsweise 1, |
| N | 0,5 bis 30 bedeuten |

E) 0,05 bis 5 Gew.-Teile, vorzugsweise 0,1 bis 1 Gew.-Teil, besonders bevorzugt 0,1 bis 0,5 Gew.-Teile, fluoriertes Polyolefin.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II)

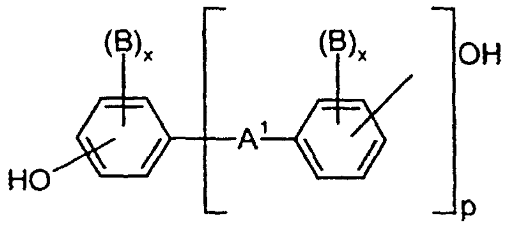

(II)

wobei

$A^1$ eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, welches mit weiteren gegebenenfalls Heteroatome enthaltenden aromatischen Ringen kondensiert sein kann, oder ein Rest der Formel

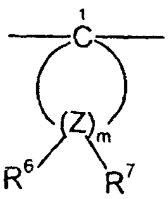

(III)

oder ein Rest der Formel (IV)

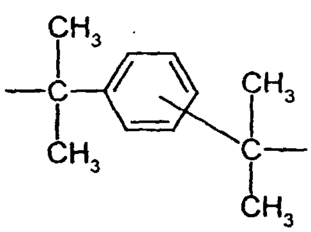

(IV)

B unabhängig voneinander $C_1$-$C_8$-Alkyl, vorzugsweise $C_1$-$C_4$-Alkyl, insbesondere Methyl, Halogen, vorzugsweise Chlor und/oder Brom, $C_6$-$C_{10}$-Aryl, vorzugsweise Phenyl, $C_7$-$C_{12}$-Aralkyl, Phenyl-$C_1$-$C_4$-Alkyl, vorzugsweise Benzyl,

x jeweils unabhängig voneinander 0, 1 oder 2,

p 1 oder 0 sind, und

$R^6$ und $R^7$ für jedes Z individuell wählbar, unabhängig voneinander, Wasserstoff oder $C_1$-$C_6$-Alkyl, vorzugsweise Wasserstoff, Methyl und/oder Ethyl,

Z Kohlenstoff und

m eine ganze Zahl von 4 bis 7, bevorzugt 4 oder 5 bedeuten,

mit der Maßgabe, daß an mindestens einem Atom Z

$R^6$ und $R^7$ gleichzeitig Alkyl sind.

Bevorzugte Diphenole sind Hydrochinon, Resorcin, 4,4'-Dihydroxydiphenyl, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$- Bis-(hydroxyphenyl)-diisopropyl-benzole wie deren kernbromierte und/oder kernchlorierte Derivate.

Besonders bevorzugte Diphenole sind 4,4'-Diphenylphenol, Bisphenol-A, 2,4- Bis-(4-hydroxyphenyl)-2-methylbutan, 1,1- Bis-(4-hydroxyphenyl)-cyclohexan, 1,1- Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an $\geq$ drei-funktionellen Verbindungen, beispielsweise solchen mit $\geq$ drei phenolischen Gruppen.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrechern auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte

Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl die Ester- als auch der Carbonatanteil der aromatischen Polyestercarbonate kann in Form von Blökken oder statistisch verteilt im Polykondensat vorliegen.

Die relative Lösungsviskosität ($\eta_{rel}$) der aromatischen Poly(ester)carbonate liegt im Bereich 1,18 bis 1,4, vorzugsweise 1,22 bis 1,3 (gemessen an Lösungen von 0,5 g Poly(ester)carbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

**Komponente B**

Die erfindungsgemäß Komponente B stellt Pfropfpolymerisate dar. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate B sind partiell vernetzt und besitzen Gelgehalte von über 20 Gew.-%, vorzugsweise über 40 Gew.-%, insbesondere über 60 Gew.-%.

Bevorzugte Pfropfpolymerisate B umfassen Pfropfpolymerisate aus:

B. 1 5 bis 95, vorzugsweise 30 bis 80 Gew.-Teile, einer Mischung aus

B.1.1 50 bis 99 Gew.-Teilen Styrol, α-Methylstyrol, halogenoder methylkernsubstituierten Styrolen, Methylmethacrylat oder Mischungen dieser Verbindungen und

B.1.2 1 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

B.2 5 bis 95, vorzugsweise 20 bis 70 Gew.-Teilen Polymerisat auf Dien- und/oder Alkylacrylat-Basis mit einer Glasübergangstemperatur unter -10°C,

Bevorzugte Pfropfpolymerisate B sind z.B. mit Styrol und/oder Acrylnitril und/oder (Meth)-Acrylsäurealkylestern gepfropfte Grundlagen B.2 wie Polybutadiene, Butadien/Styrol-Copolymerisate und Acrylatkautschuke; d.h. Copolymerisate der in der DE-OS 1 694 173 (=US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (=US-PS 3 919 353) beschrieben sind.

Besonders bevorzugte Polymerisate B sind z.B. ABS-Polymerisate, wie sie z.B. in der DE-OS 2 035 390 (=US-PS 3 644 574) oder in der DE-OS 2 248 242 (=GB-PS 1 409 275) beschrieben sind.

Besonders bevorzugte Pfropfpolymerisate B sind erhältlich durch Pfropfreaktion von

α 10 bis 70, vorzugsweise 15 bis 50, insbesondere 20 bis 40 Gew.-%, bezogen auf Pfropfpolymisat B, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage B.1 auf

β 30 bis 90, vorzugsweise 50 bis 85, insbesondere 60 bis 80 Gew.-%, bezogen auf Pfropfpolymerisat B, eines

Butadienpolymerisats mit mindestens 50 Gew.-%, bezogen auf β, Butadienresten als Pfropfgrundlage B.2.

Der Gelanteil der Pfropfgrundlage β beträgt im allgemeinen mindestens 20 Gew.-%, vorzugsweise mindestens 40 Gew.-% (in Toluol gemessen), der Pfropfgrad G 0,15 bis 0,55 und der mittlere Teilchendurchmesser $d_{50}$ des Pfropfpolymerisats B.2 0,05 bis 2 µm, vorzugsweise 0,1 bis 0,6 µm.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate B sind z.B. auch Pfropfpolymerisate aus

τ. 20 bis 90 Gew.-%, bezogen auf Komponente B, Acrylatkautschuk mit einer Glasübergangstemperatur <-20°C als Pfropfgrundlage B.2 und

δ. 10 bis 80 Gew.-%, bezogen auf Komponente B, mindestens eines polymerisierbaren, ethylenisch ungesättigten Monomeren als Pfropfmonomere B.1.

Die Acrylatkautschuke τ der Polymerisate B sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate B können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomere in Gegenwart der Pfropfgrundlage gewonnen werden.

Die mittlere Teilchengröße $d_{50}$ ist der Durchmesser, oberhalb und unterhalb dessen jeweils 50 Gew.-% der

Teilchen liegen. Er kann mittels Ultrazentrifugenmessung (W. Scholtan, H. Lange, Kolloid, Z. und Z. Polymere 250 (1972), 782-1796) bestimmt werden.

**Komponente C**

Die Komponente C umfaßt ein oder mehrere thermoplastische Vinyl (co)polymerisate C. 1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die Polyalkylenterephthalate der Komponente C.2) sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bemsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente D**

Die erfindungsgemäßen Formmassen enthalten als Flammschutzmittel wenigstens eine Phosphorverbindung der Formel (I)

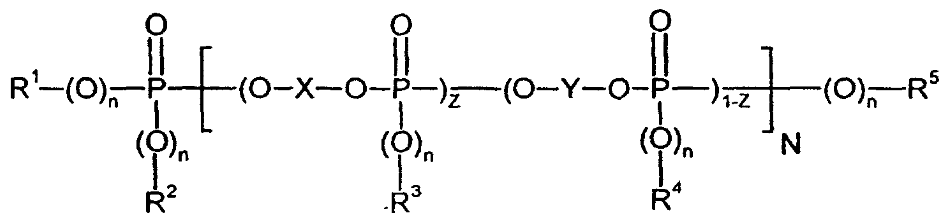

In der Formel haben die Reste $R^1$, $R^2$, $R^3$, $R^4$, $R^5$, X, Y, n, N und z die oben angegebene Bedeutung.

Die aromatischen Gruppen in der Definition von $R^1$, $R^2$, $R^3$, $R^4$ und $R^5$ können ihrerseits unabhängig voneinander mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

N steht für Werte von 0,3 bis 30, vorzugsweise für einen durchschnittlichen Wert von 0,3 bis 20, besonders bevorzugt 0,5 bis 10, insbesondere 0,5 bis 6. Bei Gemischen von Phosphorverbindungen kann N die obengenannten durchschnittlichen Werte annehmen. In diesem Gemisch können Monophosphorverbindungen und/oder oligomere und/oder polymere Phosphorverbindungen enthalten sein. Im Falle von N = 0 beschreibt die Formel (I) Monophosphorverbindungen.

X und Y in der Formel (I) sind jeweils verschieden und stehen für einen ein- oder mehrkernigen aromatischen Rest mit 6 bis 30 C-Atomen. Bevorzugte Reste leiten sich von Diphenolen gemäß Formel (II) ab.

Bevorzugte Diphenole sind Hydrochinon, Resorcin, 4,4'-Dihydroxydiphenyl, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$- Bis-(hydroxyphcnyl)-diisopropyl-benzole wie deren kembromierte und/oder kemchlorierte Derivate.

Besonders bevorzugte Diphenole sind 4,4'-Diphenylphenol, Bisphenol-A, 2,4- Bis-(4-hydroxyphenyl)-2-methylbutan, 1,1- Bis-(4-hydroxyphenyl)-cyclohexan, 1,1- Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugte Diphenole sind Bisphenol A, Resorcin, Hydrochinon, Dihydroxydiphenyl und Dihydroxydiphenylsulfon.

Mischungen aus Phosphorverbindungen der Formel (I), vorzugsweise monound/oder oligomeren Phosphaten der Formel (I), mit durchschnittlichen N-Werten von 0,5 bis 10, insbesondere 0,5 bis 6 werden als Komponente D besonders bevorzugt eingesetzt.

Vorzugsweise werden in der Mischung monomere und oligomere Phosphorverbindungen der Formel (I) so gewählt, daß eine synergistische Wirkung erzielt wird. Die Mischung besteht im allgemeinen aus 10 bis 90 Gew.-% aus oligomeren- und aus 90 bis 10 Gew.-% aus Mono-Phosphorverbindungen der Formel (I). Vorzugsweise werden die monomeren Phosphorverbindungen und/oder Mono-Phosphatverbindungen im Bereich von 12 bis 50, insbesondere von 14 bis 40, ganz besonders bevorzugt von 15 bis 40 Gew.-% mit der komplementären Menge an oligomeren Phosphatverbindungen gemischt.

Als Monophosphorverbindungen, d.h. N = O kommen Verbindungen in Frage wie Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Phosphorverbindungen gemäß Komponente D sind allgemein bekannte Verbindungen der organischen Chemie bzw. lassen sich nach bekannten Methoden in analoger Weise herstellen (vgl. z.B. Ullmanns Encyklopädie der Technischen Chemie, Bd. 18, S. 301 ff. 179; Houben-Weyl, Methoden der Organischen chemie, Bd. 12/1, S. 43; Beistein, Bd. 6, S. 177), indem zum Aufbau wenigstens 2 verschiedene Dihydroxyverbindungen, z.B. Bisphenole,

Hydrochinon, eingesetzt werden.

**Komponente E**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine E eine Dichte von 1,2 bis 2,3 g/cm$^3$. Bevorzugt fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus B und E wird zuerst eine wäßrige Emulsion (Latex) eines Pfropfpolymerisates B mit einer feinteiligen Emulsion eines fluorierten Polyolefins E vermischt; geeignete Emulsionen von fluorierten Polyolefinen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B schließt den Anteil des Pfropfpolymerisats für die koagulierte Mischung aus Pfropfpolymerisat und fluoriertem Polyolefinen nicht ein.

In der Emulsionsmischung liegt das Gleichgewichtsverhältnis Pfropfpolymerisat B zum fluorierten Polyolefin E bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon 30 N angeboten.

Die erfindungsgemäßen Formmassen können wenigstens eines der üblichen Additive, wie Gleit- und Entformungsmittel, Nukleiermittel, Antistatika, Stabilisatoren sowie Farbstoffe, Pigmente und/oder Verstärkungsmaterialien enthalten. Als anorganische Verstärkungsmaterialien kommen Glasfasern, ggf. geschnitten oder gemahlen, Glasperlen, Glaskugeln, blättchenförmiges Verstärkungsmaterial, wie Kaolin, Talk, Glimmer, Mika, Kohlefasern in Frage. Vorzugsweise werden als Verstärkungsmaterial geschnittene oder gemahlene Glasfasern, vorzugsweise mit einer Länge von 1 bis 10 mm und einem Durchmesser von <20µm in einer Menge von 1 bis 40 Gew.-Teilen eingesetzt; vorzugsweise sind die Glasfasern oberflächenbehandelt.

Die erfindungsgemäßen Formmassen können darüber hinaus wenigstens eine polare Verbindung wenigstens eines der Metalle der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium als feinstverteiltes anorganisches Pulver enthalten. Vorzugsweise werden als polare Verbindung ein Oxid oder Hydroxid, vorzugsweise $TiO_2$, $SiO_2$, $SnO_2$, ZnO, Böhmit, $ZrO_2$, $Al_2O_3$, Eisenoxide, deren Mischungen und dotierte Verbindungen, besonders bevorzugt Böhmit oder $TiO_2$, mit einem durchschnittlichen Teilchendurchmesser von <200 nm, vorzugsweise 0,1 - 100 nm, besonders bevorzugt 1 - 50 nm, eingesetzt.

Die erfindungsgemäßen Formmassen können ein oder mehrere weitere, gegebenenfalls synergistisch wirkenden Flammschutzmittel enthalten. Beispielhaft werden als weitere Flammschutzmittel von Komponente D verschiedene Phosphorverbindungen, organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen, wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt. Diese Flammschutzmittel werden im allgemeinen in einer Menge bis zu 20 Gew.-% (bezogen auf die Gesamt-Formmasse) zugesetzt.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel, Nanopartikel sowie Antistatika und Verstärkungsmaterialien und Flammschutzmittel, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpem jeder Art verwendet werden. Insbesondere können Formkörper durch Spritzguß hergestellt werden. Beispiele für herstellbare Formkörper sind: Gehäuseteile jeder Art, z. B. für Haushaltsgeräte wie Saftpressen, Kaffeemaschinen, Mixer, für Büromaschinen wie Monitore, Drucker, Kopierer oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäusen, Gehäuse für Gartengeräte.

Besonders geeignet sind die Formmassen zur Herstellung von Formteilen, wo besonders hohe Ansprüche an die Wärmeformbeständigkeit der eingesetzten Kunststoffe gestellt werden.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

## Beispiele

### Komponente A

A1 Lineares Polycarbonat auf Basis Bisphenol A mit einer relativen Lösungsviskosität von 1,278, gemessen in $CH_2Cl_2$ als Lösungsmittel bei 25°C in einer Konzentration von 0,5 g/100 ml.

A2 Lineares Polycarbonat auf Basis Bisphenol A mit einer relativen Lösungsviskosität von 1,202, gemessen in $CH_2Cl_2$ als Lösungsmittel bei 25°C in einer Konzentration von 0,5 g/100 ml

### Komponente B

Pfropfpolymerisat von 40 Gew.-Teilen eines Copolymerisats aus Styrol und Acrylnitril im Gewichtsverhältnis von 73:27 auf 60 Gew.-Teile teilchenförmigen vernetzten Polybutadienkautschuk (mittlerer Teilchendurchmesser $d_{50}$ = 0,4 μm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

D 1

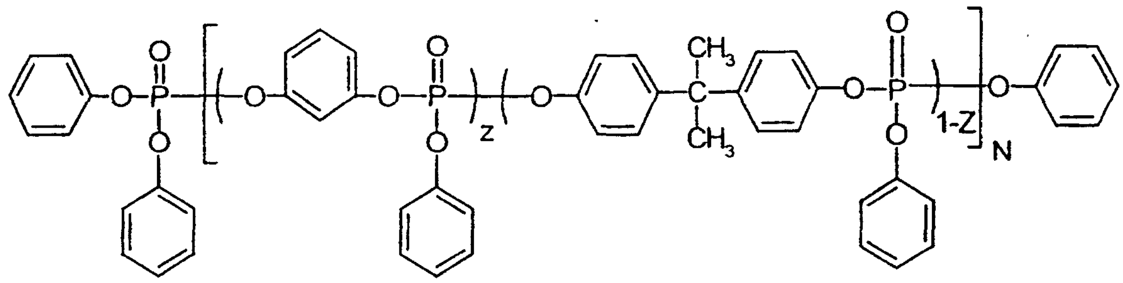

Z = 0,5     N = 1,2

D 2

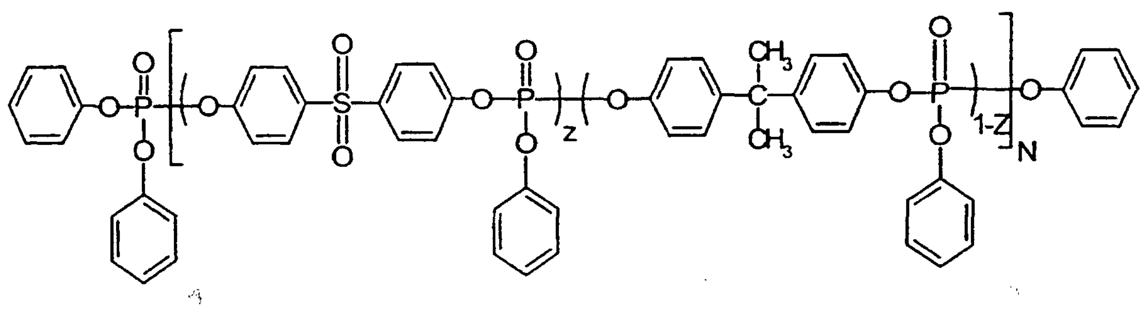

Z = 0,5     N = 1,1

D 3 (Vergleich)

m-Phenylen-bis(diphenyl)-phosphat, Fyrolflex RDP® der Firma Akzo.

**Komponente E**

Tetrafluorethylenpolymerisat als koagulierte Mischung aus einer SAN-Pfropfpolymerisat-Emulsion gemäß Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

**Herstellung von E**

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten A bis E erfolgt auf einem 3-1-Innenkneter. Die Formkörper werden auf einer Spritzgießmaschine Typ Arburg 270 E bei 260°C hergestellt.

Die Bestimmung der Kerbschlagzähigkeit erfolgt nach Methode ISO 180 1A an Stäben der Abmessung 80 x 10 x 4 $mm^3$ bei Raumtemperatur.

Die Bestimmung der Wärmeformbeständigkeit nach Vicat B erfolgt gemäß DIN 53 460.

Das Spannungsrißverhalten wird an Stäben der Abmessung 80 x 10 x 4 $mm^3$, Massetemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt und 5 min bei Zimmertemperatur im Testmedium simultan gelagert. Die Vordehnung $\delta_X$ beträgt 0,2 - 2,4 %. Das Spannungsrißverhalten wird über den Bruch in Abhängigkeit der Vordehnung und der Expositionszeit beurteilt.

Die Zusammensetzung der geprüften Materialien sowie die erhaltenen Daten sind in der folgenden Tabelle zusammengefaßt.

Tabelle 1:

| Zusammensetzung und Eigenschaften der Polycarbonat-ABS-Formmassen | | | |
|---|---|---|---|
| Beispiel | 1 | 2 | 3 |
| | Vergleich | | |
| Komponenten [Gew.-Teile] | | | |
| A 1 | 42,2 | 42,2 | 42,2 |
| A 2 | 26,2 | 26,2 | 26,2 |
| B | 6,8 | 6,8 | 6,8 |
| C | 9,3 | 9,3 | 9,3 |
| D 1 | - | 12,0 | - |
| D 2 | - | - | 12,0 |
| D 3 | 12,0 | - | - |
| E | 4,2 | 4,2 | 4,2 |
| Entformungsmittel | 0,4 | 0,4 | 0,4 |
| Eigenschaften: | | | |
| Vicat B 120 [°C] | 95 | 104 | 110 |
| Kerbschlagzähigkeit [kJ/$m^2$] | 35 | 39 | 37 |
| Schmelzviskosität bei 260°C/Scherrate 1000 $cm^{-1}$ [Pa s] | 130 | 127 | 132 |
| ESC-Verhalten | | | |
| 5min/2,0% | - | BR 1:52 | - |
| 5min/1,8% | BR 3:05 | - | BR 5:00 |

Aus der Tabelle geht hervor, daß die erfindungsgemäßen flammwidrigen Formmassen eine sehr günstige Eigenschaftskombination aus mechanischen Eigenschaften, insbesondere eine Verbesserung der Spannungsrißbeständigkeit, Kerbschlagzähigkeit und Wärmeformbeständigkeit zeigen. Dies ist umso überraschender, da trotz der z. T. deutlich höheren Wärmeformbeständigkeit die Schmelzeviskosität bei einer Verarbeitungstemperatur von 260°C

nicht ansteigt, sondern auf dem Niveau des Vergleichsversuches bleibt. Dabei wird also deutlich, daß sich durch Einsatz von Phosphaten, die aus verschiedenen Struktureinheiten aufgebaut sind, verschiedene Eigenschaften wie mechanische oder thermische Eigenschaften gezielt verbessern lassen, ohne daß es zu einer Verschlechterung des Verarbeitungsverhaltens kommt.

**Patentansprüche**

**1.** Thermoplastische Formmasse enthaltend mindestens 2 Komponenten ausgewählt aus der Gruppe der aromatischen Poly(ester)carbonate, Pfropfpolymerisate von einem oder mehreren Vinylmonomeren auf eine oder mehrere Pfropfgrundlage mit einer Glasübergangstemperatur <10°C, thermoplastischem Vinyl(co)polymerisat und Polyalkylenterephthalat sowie 0,5 bis 20 Gew.-Teile Phosphorverbindung der allgemeinen Formel (I)

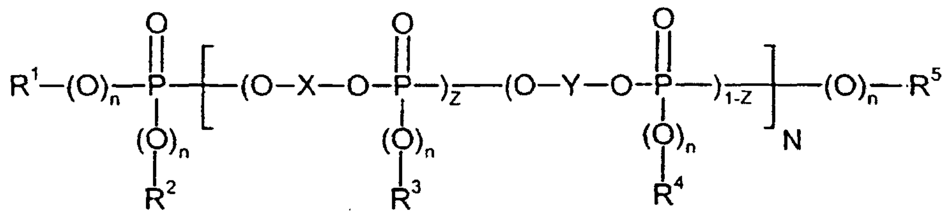

worin

| | |
|---|---|
| X und Y | für einen ein- oder mehrkernigen aromatischen Rest mit 6 bis 30 C-Atomen stehen und X und Y verschieden voneinander sind, |
| $R^1$, $R^2$, $R^3$, $R^4$ und $R^5$ | unabhängig voneinander, gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| Z | 0,05 bis 0,95, vorzugsweise 0,15 bis 0,85, |
| n | unabhängig voneinander 0 oder 1, vorzugsweise 1, |
| N | 0,5 bis 30 bedeuten |

als einer weiteren Komponente.

**2.** Thermoplastische Formmassen enthaltend

A. 5 bis 95 Gew.-Teile aromatisches Polycarbonat oder Polyestercarbonat

B. 0,5 bis 60 Gew.-Teile Pfropfpolymerisat von

B.1 5 bis 95 Gew.-% einem oder mehreren Vinylmonomeren auf

B.2 5 bis 95 Gew.-% einen oder mehrere Pfropfgrundlagen mit einer Glasumwandlungstemperatur < -10°C,

C. 0 bis 50 Gew.-Teile thermoplastisches Vinyl(co)polymerisat, und/oder Polyalkyenterephtalat

D. 0,5 bis 20 Gew.-Teile Phosphorverbindung der allgemeinen Formel (I)

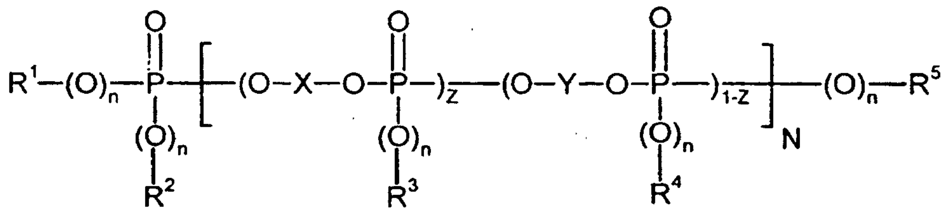

worin

| | |
|---|---|
| X und Y | für einen ein- oder mehrkernigen aromatischen Rest mit 6 bis 30 C-Atomen stehen und X und Y verschieden voneinander sind, |
| $R^1$, $R^2$, $R^3$, $R^4$ und $R^5$ | unabhängig voneinander, gegebenenfalls halogeniertes $C_1$-$C_8$-Alkyl, jeweils gegebenenfalls durch Halogen und/oder $C_1$-$C_4$-Alkyl substituiertes $C_5$-$C_6$-Cycloalkyl, $C_6$-$C_{20}$-Aryl oder $C_7$-$C_{12}$-Aralkyl, |
| z | 0,05 bis 0,95, vorzugsweise 0,15 bis 0,85, |
| n | unabhängig voneinander 0 oder 1, vorzugsweise 1, |
| N | 0,5 bis 30 bedeuten, |

E. 0,05 bis 5 Gew.-Teile fluoriertes Polyolefin,

wobei die Summe der Gew.-Teile aller Formmassenkomponenten 100 ergibt.

**3.** Formmassen nach Anspruch 1, wobei die Phosphorverbindungen der Formel (I) ein durchschnittliches N von 0,3 bis 20 aufweist.

**4.** Formmassen nach einem der Ansprüche 1 bis 3, wobei die Phosphorverbindungen der Formel (I) ein Gemisch von Phosphorverbindungen mit durchschnittlichen Werten für N von 0,5 bis 10 sind.

**5.** Formmassen nach Anspruch 1 bis 4, wobei in Formel (I) X und Y verschieden sind und sich von Diphenolen der Formel (II) ableiten:

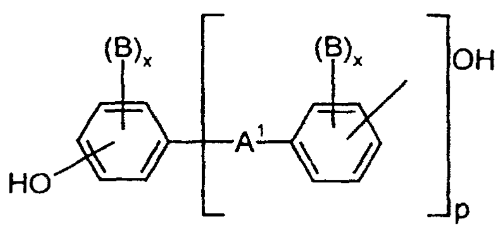

(II)

wobei

| | |
|---|---|
| $A^1$ | eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, welches mit weiteren gegebenenfalls Heteroatome enthaltenden aromatischen Ringen kondensiert sein kann, oder ein Rest der Formel |

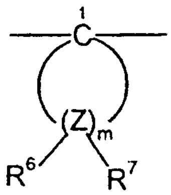

(III)

oder ein Rest der Formel (IV)

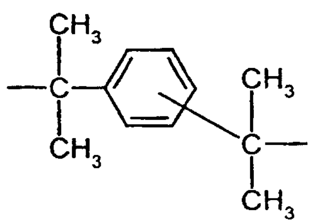

(IV)

| | |
|---|---|
| B | unabhängig voneinander $C_1$-$C_8$-Alkyl, Halogen, $C_6$-$C_{10}$-Aryl, $C_7$-$C_{12}$-Aralkyl, |
| x | jeweils unabhängig voneinander 0, 1 oder 2, |
| p | 1 oder 0 sind, und |
| $R^6$ und $R^7$ | für jedes Z individuell wählbar, unabhängig voneinander, Wasserstoff oder $C_1$-$C_6$-Alkyl, |
| Z | Kohlenstoff und |
| m | eine ganze Zahl von 4 bis 7 bedeuten, |

mit der Maßgabe, daß an mindestens einem Atom Z

$R^6$ und $R^7$ gleichzeitig Alkyl sind.

**6.** Formmassen nach einem der vorhergehenden Ansprüche, worin X und Y in Formel (I) verschieden sind und sich ableiten von Diphenolen ausgewählt aus der Gruppe bestehend aus Hydrochinon, Resorcin, 4,4'-Dihydroxydiphenyl, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide,Bis-(hydroxyphenyl)-ketone,Bis-(hydroxyphenyl)-sulfoneund$\alpha$,$\alpha$-Bis-(hydroxyphenyl)-diisopropyl-benzole wie deren kernbromierte und/oder kemchlorierte Derivate.

**7.** Formmassen nach einem der vorhergenden Ansprüche, die 0,01 bis 35 Gew.%, bezogen auf die Gesamtformmasse, wenigstens eines weiteren Flammschutzmittels enthalten.

**8.** Formmassen nach einem der vorhergehenden Ansprüche, enthaltend 10 bis 90 Gew.-Teile der Komponente A 1 bis 40 Gew.-Teile der Komponente B und 1 bis 18 Gew.-Teile der Komponente D.

**9.** Formmassen nach einem der vorhergehenden Ansprüche, enthaltend 20 bis 80 Gew.-Teile der Komponente A, 2 bis 30 Gew.Teile der Komponente B und 2 bis 15 Gew.-Teile der Komponente D.

**10.** Formmassen nach einem der vorhergehenden Ansprüche, wobei die Pfropfgrundlage B.2 ein Dienkautschuk, Acrylatkautschuk, Silikonkautschuk oder Ethylen-Propylen-Dien-Kautschuk ist.

**11.** Formmassen nach einem der vorhergehenden Ansprüche, enthaltend eine feinstteilige Verbindung der 1. bis 5. Hauptgruppe oder der 1. bis 8. Nebengruppe des Periodensystems mit mindestens einem Element ausgewählt

aus der Gruppe von Sauerstoff, Schwefel, Bor, Kohlenstoff, Phosphor, Stickstoff, Wasserstoff und Silizium.

**12.** Formmassen nach einem der vorhergehenden Ansprüche, welche mindestens einen Zusatz aus der Gruppe der Stabilisatoren, Pigmente, Entformungsmittel, Fließhilfsmittel, anorganische Verstärkungsmaterialien, Nanopartikeln und/oder Antistatika enthalten.

**13.** Verwendung der Formmassen nach einem der vorhergehenden Ansprüche zur Herstellung von Formkörpern.

**14.** Formkörper, hergestellt aus Formmassen nach einem der Ansprüche 1 bis 12.

**Claims**

**1.** Thermoplastic moulding composition comprising at least 2 components chosen from the group of aromatic poly (ester)carbonates, graft polymers of one or more vinyl monomers on one or more graft bases having a glass transition temperature of < 10°C, thermoplastic vinyl (co)polymer and polyalkylene terephthalate and 0.5 to 20 parts by wt. phosphorus compound of the general formula (I)

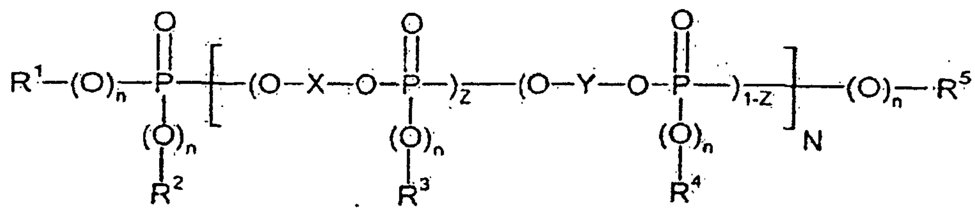

wherein

| | |
|---|---|
| X and Y | represent a mono- or polynuclear aromatic radical having 6 to 30 C atoms, and X and Y differ from one another, |
| $R^1$, $R^2$, $R^3$, $R^4$ and $R^5$ | independently of one another denote optionally halogenated $C_1$-$C_8$-alkyl, or $C_5$-$C_6$-cycloalkyl, $C_6$-$C_{20}$-aryl or $C_7$-$C_{12}$-aralkyl, in each case optionally substituted by halogen and/or $C_1$-$C_4$-alkyl, |
| Z | denotes 0.05 to 0.95, preferably 0.15 to 0.85, |
| n | independently of one another denote 0 or 1, preferably 1, and |
| N | denotes 0.5 to 30 |

as a further component.

**2.** Thermoplastic moulding compositions comprising

A. 5 to 95 parts by wt. aromatic polycarbonate or polyester-carbonate,

B. 0.5 to 60 parts by wt. graft polymer of

B.1 5 to 95 wt.% of one or more vinyl monomers on

B.2 5 to 95 wt.% of one or more graft bases having a glass transition temperature of < -10°C,

C. 0 to 50 parts by wt. thermoplastic vinyl (co)polymer and/or polyalkylene terephthalate

D. 0.5 to 20 parts by wt. of a phosphorus compound of the formula (I)

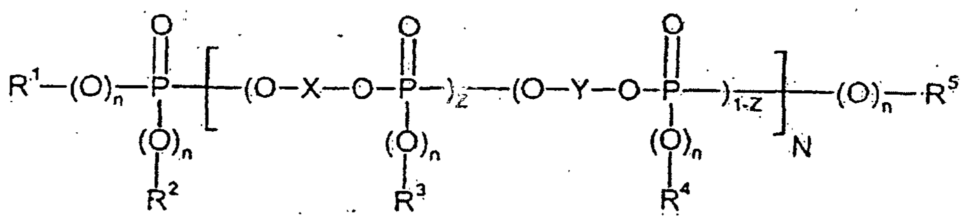

wherein

| | |
|---|---|
| X and Y | represent a mono- or polynuclear aromatic radical having 6 to 30 C atoms, and X and Y differ from one another, |
| $R^1$, $R^2$, $R^3$, $R^4$ and $R^5$ | independently of one another denote optionally halogenated $C_1$-$C_8$-alkyl, or $C_5$-$C_6$-cycloalkyl, $C_6$-$C_{20}$-aryl or $C_7$-$C_{12}$-aralkyl, in each case optionally substituted by halogen and/or $C_1$-$C_4$-alkyl, |
| z | denotes 0.05 to 0.95, preferably 0.15 to 0.85 |
| n | independently of one another denote 0 or 1, preferably 1, and |
| N | denotes 0.5 to 30 |

E. 0.05 to 5 parts by wt. fluorinated polyolefin,

the sum of the parts by wt. of all the moulding composition components being 100.

**3.** Moulding compositions according to claim 1, wherein the phosphorus compounds of the formula (I) have an average N of 0.3 to 20.

**4.** Moulding compositions according to any one of claims 1 to 3, wherein the phosphorus compounds of the formula (I) are a mixture of phosphorus compounds with average values for N of 0.5 to 10.

**5.** Moulding compositions according to any of claims 1 to 4, wherein in formula (I) X and Y are different and are derived from diphenols of the formula (II):

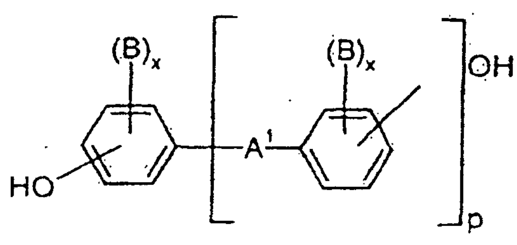

(II)

wherein

| | |
|---|---|
| $A^1$ | is a single bond, $C_1$-$C_5$-alkylene, $C_2$-$C_5$-alkylidene, $C_5$-$C_6$-cycloalkylidene, -O-, -SO-, -CO-. -S-. -$SO_2$-, $C_6$-$C_{12}$-arylene, which can be fused with further aromatic rings optionally containing heteroatoms, or a radical of the formula |

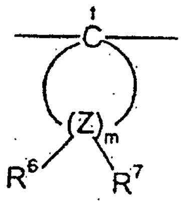

(III)

or a radical of the formula (IV)

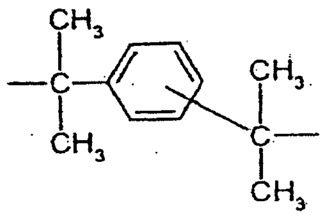

(IV)

B independently of one another are $C_1$-$C_8$-alkyl, halogen, $C_6$-$C_{10}$-aryl, $C_7$-$C_{12}$-aralkyl,

x in each case independently of one another are 0, 1 or 2,

p is 1 or 0, and

$R^6$ and $R^7$ can be chosen individually for each Z and independently of one another denote hydrogen or $C_1$-$C_6$-alkyl,

Z denotes carbon and

m denotes an integer from 4 to 7,

with the proviso that on at least one atom Z

$R^6$ and $R^7$ simultaneously are alkyl.

**6.** Moulding compositions according to any one of the preceding claims, wherein X and Y in formula (I) are different and are derived from diphenols chosen from the group consisting of hydroquinone, resorcinol, 4,4'-dihydroxydiphenyl, bis-(hydroxyphenyl)-$C_1$-$C_5$-alkanes, bis-(hydroxyphenyl)-$C_5$-$C_6$-cycloalkanes, bis-(hydroxyphenyl) ethers, bis-(hydroxyphenyl) sulfoxides, bis(hydroxyphenyl) ketones, bis-(hydroxyphenyl) sulfones and $\alpha,\alpha$-bis(hydroxyphenyl)-diisopropyl-benzenes and derivatives thereof brominated on the nucleus and/or chlorinated on the nucleus.

**7.** Moulding compositions according to any one of the preceding claims, which comprise 0.01 to 35 wt.%, based on the total moulding composition, of at least one further flameproofing agent.

**8.** Moulding compositions according to any one of the preceding claims, comprising 10 to 90 parts by wt. component A, 1 to 40 parts by wt. component B and 1 to 18 parts by wt. component D.

**9.** Moulding compositions according to any one of the preceding claims, comprising 20 to 80 parts by wt. component A, 2 to 30 parts by wt. component B and 2 to 15 parts by wt. component D.

**10.** Moulding compositions according to any one of the preceding claims, wherein graft base B.2 is a diene rubber, acrylate rubber, silicone rubber or ethylene/propylene/diene rubber.

**11.** Moulding compositions according to any one of the preceding claims, comprising a very finely divided compound

of main groups 1 to 5 or sub-groups 1 to 8 of the periodic table with at least one element chosen from the group consisting of oxygen, sulfur, boron, carbon, phosphorus, nitrogen, hydrogen and silicon.

**12.** Moulding compositions according to any one of the preceding claims, which comprise at least one additive from the group consisting of stabilizers, pigments, mould release agents, flow auxiliaries, inorganic reinforcing materials, nanoparticles and/or antistatics.

**13.** Use of the moulding compositions according to any one of the preceding claims for the production of shaped articles.

**14.** Shaped articles produced from moulding compositions according to any one of claims 1 to 12.

**Revendications**

**1.** Matières moulables thermoplastiques contenant au moins deux composants choisis dans le groupe des poly(ester) carbonates aromatiques, polymérisats greffés d'un ou plusieurs monomère(s) vinylique(s) sur une ou plusieurs base(s) de greffage d'une température de transition vitreuse inférieure à 10 °C, (co)polymérisat vinylique thermoplastique et téréphthalate de polyalkylène ainsi que 0,5 à 20 partie(s) en poids de composé phosphoré répondant à la formule générale (I) :

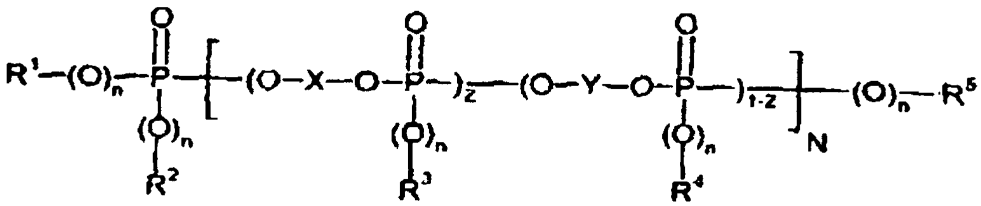

dans laquelle

X et Y représentent un reste aromatique mono- ou polynucléaire comportant 6 à 30 atomes de carbone et X et Y sont différents l'un de l'autre,

$R^1$, $R^2$, $R^3$, $R^4$ et $R^5$ représentent, indépendamment les uns des autres, alkyle en $C_1$-$C_8$ le cas échéant halogéné, cycloalkyle en $C_5$-$C_6$, aryle en $C_6$-$C_{20}$ ou aralkyle en $C_7$-$C_{12}$, à chaque fois le cas échéant substitué par un atome d'halogène et/ou un groupe alkyle en $C_1$-$C_4$ ,

Z a pour valeur 0,05 à 0,95, de préférence 0,15 à 0,85,

n ont pour valeur, indépendamment les uns des autres, 0 ou 1, de préférence 1,

N a pour valeur 0,5 à 30 ,

comme autre composant .

**2.** Matières moulables thermoplastiques contenant :

A. 5 à 95 parties en poids de polycarbonate aromatique ou de carbonate de polyester,

B. 0,5 à 60 partie(s) en poids de polymérisat greffé

B.1 5 à 95 % en poids d'un ou plusieurs monomère(s) vinylique(s) sur

B.2 5 à 95 % en poids d'une ou plusieurs base(s) de greffage d'une température de transition vitreuse inférieure à - 10 °C,

C. 0 à 50 partie(s) en poids de (co)polymérisat vinylique thermoplastique et/ou téréphthalate de polyalkylène,

D. 0,5 à 20 partie(s) en poids de composé phosphoré répondant à la formule générale (I) :

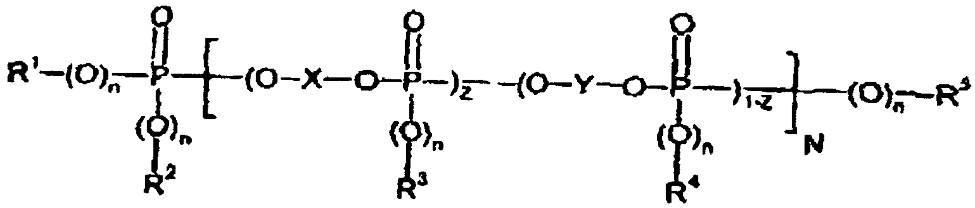

dans laquelle

X et Y représentent un reste aromatique mono- ou polynucléaire comportant 6 à 30 atomes de carbone et X et Y sont différents l'un de l'autre,

$R^1$, $R^2$, $R^3$, $R^4$ et $R^5$ représentent, indépendamment les uns des autres, alkyle en $C_1$-$C_8$ le cas échéant halogéné, cycloalkyle en $C_5$-$C_6$, aryle en $C_6$-$C_{20}$ ou aralkyle en $C_7$-$C_{12}$, à chaque fois le cas échéant substitué par un atome d'halogène et/ou un groupe alkyle en $C_1$-$C_4$ ,

Z a pour valeur 0,05 à 0,95, de préférence 0,15 à 0,85

n ont pour valeur, indépendamment les uns des autres, 0 ou 1, de préférence 1,

N a pour valeur 0,5 à 30 ,

E. 0,05 à 5 partie(s) en poids de polyoléfine fluorée,

la somme des parties en poids de tous les composants de la matière moulable se complétant à 100.

**3.** Matières moulables selon la revendication 1, le composé phosphoré de formule (I) présentant un N moyen de 0,3 à 20.

**4.** Matières moulables selon une quelconque des revendications 1 à 3, le composé phosphoré de formule (I) étant un mélange de composés phosphorés avec des valeurs moyennes pour N de 0,5 à 10.

**5.** Matières moulables selon une quelconque des revendications 1 à 4, X et Y étant différents dans la formule (I) et dérivant de diphénols répondant à la formule (II) :

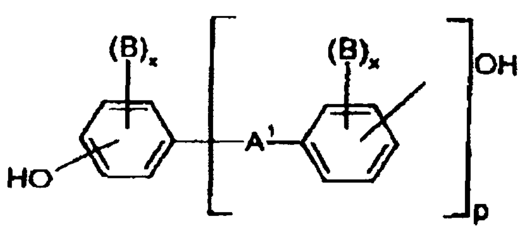

(II)

dans laquelle:

$A^1$ représente une liaison simple, alkylène en $C_1$-$C_5$, alkylidène en $C_2$-$C_5$, cycloalkylidène en $C_5$-$C_6$, -O-, -SO-, -CO-, -S-, $-SO_2-$, arylène en $C_6$-$C_{12}$ , qui peut être condensé avec d'autres noyaux aromatiques contenant, le cas échéant, des hétéroatomes, ou un reste répondant à la formule (III) :

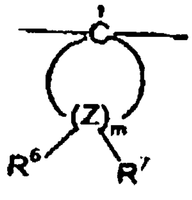

(III)

ou un reste répondant à la formule (IV)

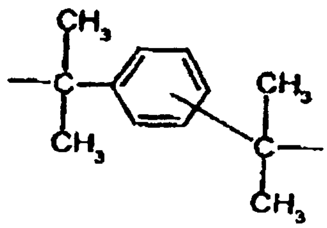

(IV)

B représentent, indépendamment l'un de l'autre, alkyle en $C_1$-$C_8$ , un atome d'halogène, aryle en $C_6$-$C_{10}$, aralkyle en $C_7$-$C_{12}$,
x ont pour valeur, indépendamment l'un de l'autre, 0, 1 ou 2.
p a pour valeur 1 ou 0, et
$R^6$ et $R^7$, qui peuvent être choisis individuellement pour chaque Z , représentent, indépendamment l'un de l'autre, un atome d'hydrogène ou alkyle en $C_1$-$C_6$,
Z représente un carbone, et
m représente un nombre entier de 4 à 7,

avec la précision que, sur au moins un atome Z,
$R^6$ et $R^7$ sont en même temps alkyle.

6. Matières moulables selon une quelconque des revendications précédentes, dans laquelle X et Y dans la formule (I) sont différents et dérivent de diphénols choisis dans le groupe constitué d'hydroquinone, résorcine, 4,4'-dihydroxydiphényle, bis-(hydroxyphényl)-alcanes en $C_1$-$C_5$, bis-(hydroxyphényl)-cycloalcanes en $C_5$-$C_6$, bis-(hydroxyphényl)-éther, bis-(hydroxyphényl)-sulfoxyde, bis-(hydroxyphényl)-cétones, bis(hydroxyphényl)-sulfones et $\alpha,\alpha$-bis(hydroxyphényl)-diisopropylbenzènes comme leurs dérivés bromés sur le noyau et/ou chlorés sur le noyau.

7. Matières moulables selon une quelconque des revendications précédentes, qui contiennent 0,01 à 35 % en poids, rapporté à la masse moulable totale, d'au moins un autre agent ignifugeant.

8. Matières moulables selon une quelconque des revendications précédentes, contenant 10 à 90 parties en poids du composant A, 1 à 40 parties en poids du composant B et 1 à 18 parties en poids du composant D.

9. Matières moulables selon une quelconque des revendications précédentes contenant 20 à 80 parties en poids du composant A, 2 à 30 parties en poids du composant B et 2 à 15 parties en poids du composant D.

10. Matières moulables selon une quelconque des revendications précédentes, la base de greffage B2 étant un caoutchouc diène, un caoutchouc d'acrylate, un caoutchouc de silicone ou un caoutchouc éthylène-propylène-diène.

11. Matières moulables selon une quelconque des revendications précédentes contenant un composé très finement divisé du groupe principal 1 à 5 ou du groupe secondaire 1 à 8 du Système Périodique avec au moins un élément choisi dans le groupe constitué de l'oxygène, du soufre, du bore, du carbone, du phosphore, de l'azote, de l'hydrogène et du silicium.

12. Matières moulables selon une quelconque des revendications précédentes qui contiennent au moins un additif choisi dans le groupe constitué des stabilisants, pigments, agents de démoulage, auxiliaires d'écoulement, matériaux de renforcement inorganiques, nano-particules et/ou antistatiques.

13. Utilisation de matières moulables selon une quelconque des revendications précédentes pour la fabrication d'objets moulés.

14. Objets moulés fabriqués à partir de matières moulables selon une quelconque des revendications 1 à 12.